# EUROPEAN PATENT APPLICATION

(11) **EP 4 768 544 A1**
(43) Date of publication of application: **01.07.2026**
(21) Application number: 24856506.1
(22) Date of filing: 22.08.2024
(51) Int. Cl.: C08L 77/06, C08J 5/16, C08K 7/14, C08K 9/00, C08L 77/00

(54) **POLYAMIDE RESIN COMPOSITION**

(30) Priority: 23.08.2023 JP 2023135461; 16.01.2024 JP 2024004507
(71) Applicant: UBE Corporation, Ube-shi, Yamaguchi 755-8633 (JP)
(72) Inventor: HORIIKE, Yuma, Ube-shi, Yamaguchi 755-8633 (JP)
(74) Representative: Hoffmann Eitle
(86) International application number: PCT/JP2024/029774
(87) International publication number: WO 2025/041818

(57) **Abstract**

Provided is a polyamide resin composition having a good mechanical property typified by tensile strength, good properties required of a sliding article, such as fatigue strength and wear resistance, and good moldability typified by fluidity.

The polyamide resin composition of the present invention includes an aliphatic polyamide resin (A) and glass fibers (B) coated with a sizing agent, wherein, for all polyamide resins in the polyamide resin composition, based on the total peak area calculated in terms of poly(methyl methacrylate) standards using gel permeation chromatography, a proportion of peak area of a polyamide resin having a molecular weight of 30,000 or less is 22.00 to 30.00 area%, and a proportion of peak area of a polyamide resin having a molecular weight of 100,000 or more is 14.00 to 27.00 area%, a molecular weight distribution (weight average molecular weight (Mw)/number average molecular weight (Mn)) of all the polyamide resins in the polyamide resin composition is 4.00 to 8.50, and the sizing agent contains a polyurethane resin and a copolymer having an acidic group.

## Description

### [Technical Field]

The present invention relates to a polyamide resin composition.

### [Background Art]

Polyamide resins have excellent properties as engineering plastics and are widely used in various industrial fields such as automobiles, machinery, and electric and electronic fields. Among them, polyamide resins are excellent in rigidity and toughness and used for sliding parts used under frictional conditions, such as gears, cams, pulleys, bearings, bearing retainers, door checks, and timing chain guide articles.

Sliding parts are required to have wear resistance, and therefore selection of the type of polyamide resin to be used, addition of a reinforcing material, addition of a thermoplastic resin other than a polyamide resin, etc. are performed.

Patent Literatures 1 to 3 disclose polyamide resin compositions obtained by blending two polyamide resins having different relative viscosities and glass fibers.

Patent Literatures 3 and 4 disclose polyamide resin compositions obtained by blending a polyamide resin with glass fibers coated with a sizing agent.

### [Citation List]

### [Patent Literatures]

[Patent Literature 1] JP 2018-197316 A
[Patent Literature 2] Japanese Patent No. 5973115
[Patent Literature 3] JP 2016-117817 A
[Patent Literature 4] Japanese Patent No. 4321590

### [Summary of Invention]

### [Technical Problem]

However, when the relative viscosity is increased to enhance strength, fluidity is deteriorated.

Further, the glass fibers also influence the physical properties of the polyamide resin composition depending on the type of sizing agent to be used.

It is therefore an object of the present invention to provide a polyamide resin composition having a good mechanical property typified by tensile strength, good properties required of a sliding article, such as fatigue strength and wear resistance, and good moldability typified by fluidity.

### [Solution to Problem]

The present invention is directed to, for example, the following [1] to [18].
[1] A polyamide resin composition including:
   an aliphatic polyamide resin (A) and glass fibers (B) coated with a sizing agent,
   in which, for all polyamide resins in the polyamide resin composition,
   based on a total peak area calculated in terms of poly(methyl methacrylate) standards using gel permeation chromatography, a proportion of peak area of a polyamide resin having a molecular weight of 30,000 or less is 22.00 to 30.00 area%, and a proportion of peak area of a polyamide resin having a molecular weight of 100,000 or more is 14.00 to 27.00 area%,
   a molecular weight distribution (weight average molecular weight (Mw)/number average molecular weight (Mn)) of all the polyamide resins in the polyamide resin composition is 4.00 to 8.50, and
   the sizing agent contains a polyurethane resin and a copolymer having an acidic group.
[2] The polyamide resin composition according to item [1], in which the aliphatic polyamide resin (A) has a relative viscosity of 2.50 to 3.35 as measured by dissolving 1 g of the aliphatic polyamide resin (A) in 100 mL of 96% concentrated sulfuric acid and performing measurement at 25°C in accordance with JIS K6920-2, and
   the aliphatic polyamide resin (A) has a terminal amino group concentration of more than 15.00 µmol/g to less than 50.00 µmol/g.
[3] The polyamide resin composition according to item [1] or [2], in which the polyamide resin composition includes 68 to 88% by mass of the aliphatic polyamide resin (A) and 5 to 30% by mass of the glass fibers (B) coated with a sizing agent, based on 100% by mass of the polyamide resin composition.
[4] The polyamide resin composition according to any one of items [1] to [3] above, in which the aliphatic polyamide resin (A) is an aliphatic homopolyamide resin (A-1).
[5] The polyamide resin composition according to item [4], in which the aliphatic polyamide resin (A) is a combination of two or more aliphatic homopolyamide resins (A-1) having different terminal amino group concentrations.
[6] The polyamide resin composition according to item [4] or [5], in which the aliphatic homopolyamide resin (A-1) is an aliphatic homopolyamide resin (A-1-1) having a constituent unit derived from an aminocarboxylic acid or a lactam.
[7] The polyamide resin composition according to item [4] or [5], in which the aliphatic homopolyamide resin (A-1) is an aliphatic homopolyamide resin (A-1-2) having a constituent unit derived from a reaction product between an aliphatic diamine and an aliphatic dicarboxylic acid.
[8] The polyamide resin composition according to item [6], in which the aliphatic homopolyamide resin (A-1-1) is at least one member selected from the group consisting of polyamide 6, polyamide 11, and polyamide 12.
[9] The polyamide resin composition according to item [7], in which the aliphatic homopolyamide resin (A-1-2) is at least one member selected from the group consisting of polyamide 56, polyamide 66, polyamide 410, polyamide 510, polyamide 610, and polyamide 612.
[10] The polyamide resin composition according to any one of items [1] to [9] above, in which the glass fibers (B) have an average fiber diameter of 5.0 to 12.0 µm.
[11] The polyamide resin composition according to any one of items [1] to [10] above, in which the glass fibers (B) have a number average fiber length of 200 to 350 µm.
[12] The polyamide resin composition according to any one of items [1] to [11] above, in which the glass fibers (B) have a weight average fiber length of 250 to 450 µm.
[13] The polyamide resin composition according to any one of items [1] to [12] above, in which a content of the copolymer having an acidic group is 0.5 to 10.0% by mass based on 100% by mass of the sizing agent.
[14] The polyamide resin composition according to any one of items [1] to [13] above, in which, based on 100% by mass of all constituent units of the copolymer having an acidic group contained in the sizing agent, a constituent unit derived from a monomer having an acidic group is in an amount of 20 to 60% by mass.
[15] The polyamide resin composition according to any one of items [1] to [14] above, in which a constituent unit derived from a monomer having an acidic group in the copolymer having an acidic group contained in the sizing agent is a constituent unit derived from an unsaturated carboxylic acid and/or a carboxylic anhydride.
[16] A molded article obtained from the polyamide resin composition according to any one of items [1] to [15] above.
[17] The molded article according to item [16], which is used for a part requiring a sliding property.
   A second aspect of the invention includes, for example, the following [18] to [29].
[18] A polyamide resin composition including:
   an aliphatic polyamide resin (A) and glass fibers (B) coated with a sizing agent,
   in which the aliphatic polyamide resin (A) has a relative viscosity of 2.50 to 3.35 as measured by dissolving 1 g of the aliphatic polyamide resin (A) in 100 mL of 96% concentrated sulfuric acid and performing measurement at 25°C in accordance with JIS K6920-2,
   the aliphatic polyamide resin (A) has a terminal amino group concentration of more than 15.00 µmol/g to less than 50.00 µmol/g, and
   the sizing agent contains a polyurethane resin and a copolymer having an acidic group.
[19] The polyamide resin composition according to item [18], in which the aliphatic polyamide resin (A) is an aliphatic homopolyamide resin (A-1).
[20] The polyamide resin composition according to item [19], in which the aliphatic homopolyamide resin (A-1) is an aliphatic homopolyamide resin (A-1-1) having a constituent unit derived from an aminocarboxylic acid or a lactam.
[21] The polyamide resin composition according to item [19], in which the aliphatic homopolyamide resin (A-1) is an aliphatic homopolyamide resin (A-1-2) having a constituent unit derived from a reaction product between an aliphatic diamine and an aliphatic dicarboxylic acid.
[22] The polyamide resin composition according to item [20], in which the aliphatic homopolyamide resin (A-1-1) is at least one member selected from the group consisting of polyamide 6, polyamide 11, and polyamide 12.
[23] The polyamide resin composition according to item [21], in which the aliphatic homopolyamide resin (A-1-2) is at least one member selected from the group consisting of polyamide 56, polyamide 66, polyamide 410, polyamide 510, polyamide 610, and polyamide 612.
[24] The polyamide resin composition according to any one of items [18] to [23] above, in which the glass fibers (B) have an average fiber diameter of 5.0 to 12.0 µm at a time of start of blending.
[25] The polyamide resin composition according to any one of items [18] to [24] above, in which a content of the copolymer having an acidic group is 0.5 to 10.0% by mass based on 100% by mass of the sizing agent.
[26] The polyamide resin composition according to any one of items [18] to [25] above, in which, based on 100% by mass of all constituent units of the copolymer having an acidic group contained in the sizing agent, a constituent unit derived from a monomer having an acidic group is in an amount of 20 to 60% by mass.
[27] The polyamide resin composition according to any one of items [18] to [26] above, in which a constituent unit derived from a monomer having an acidic group in the copolymer having an acidic group contained in the sizing agent is a constituent unit derived from an unsaturated carboxylic acid and/or a carboxylic anhydride.
[28] A molded article obtained from the polyamide resin composition according to any one of items [18] to [27] above.
[29] The molded article according to item [28], which is used for an application requiring a sliding property.

### [Advantageous Effect of Invention]

The polyamide resin composition of the present invention has a good mechanical property typified by tensile strength, good properties required of a sliding article, such as fatigue strength and wear resistance, and good moldability typified by fluidity.

### [Description of Embodiments]

A first aspect of the present invention is as follows.

The present invention relates to a polyamide resin composition including:
an aliphatic polyamide resin (A) and glass fibers (B) coated with a sizing agent,
in which, for all polyamide resins in the polyamide resin composition,
based on a total peak area calculated in terms of poly(methyl methacrylate) standards using gel permeation chromatography, a proportion of peak area of a polyamide resin having a molecular weight of 30,000 or less is 22.00 to 30.00 area%, and a proportion of peak area of a polyamide resin having a molecular weight of 100,000 or more is 14.00 to 27.00 area%,
a molecular weight distribution (weight average molecular weight (Mw)/number average molecular weight (Mn)) of all the polyamide resins in the polyamide resin composition is 4.00 to 8.50, and
the sizing agent contains a polyurethane resin and a copolymer having an acidic group.

### <Aliphatic polyamide resin (A)>

The aliphatic polyamide resin (A) is blended in the polyamide resin composition.

The aliphatic polyamide resin (A) is at least one polyamide resin selected from the group consisting of an aliphatic homopolyamide resin (A-1) and an aliphatic copolyamide resin (A-2).

### (A-1) Aliphatic homopolyamide resin

The aliphatic homopolyamide resin (A-1) means a polyamide resin in which the monomer component constituting the aliphatic polyamide resin is of a single kind. Here, examples of the monomer component constituting the aliphatic polyamide resin include an aminocarboxylic acid, a lactam, and a combination of an aliphatic diamine and an aliphatic dicarboxylic acid. The combination of an aliphatic diamine and an aliphatic dicarboxylic acid is a monomer component composed of a condensate of an aliphatic diamine and an aliphatic dicarboxylic acid. When the monomer component constituting the aliphatic polyamide resin is a combination of an aliphatic diamine and an aliphatic dicarboxylic acid, a combination of one aliphatic diamine and one aliphatic dicarboxylic acid is regarded as one monomer component. The term "aliphatic" is used to include alicyclic.

The aliphatic homopolyamide resin (A) is at least one aliphatic homopolyamide resin selected from the group consisting of an aliphatic polyamide resin (A-1-1) having a constituent unit derived from an aminocarboxylic acid or a lactam and an aliphatic polyamide resin (A-1-2) having a constituent unit derived from a reaction product between an aliphatic diamine and an aliphatic dicarboxylic acid.

The number of carbon atoms of the aminocarboxylic acid is preferably 4 to 12. The number of carbon atoms of the lactam is preferably 4 to 12.

The number of carbon atoms of the aliphatic diamine is preferably 2 to 20, more preferably 4 to 12. The number of carbon atoms of the aliphatic dicarboxylic acid is preferably 2 to 20, more preferably 6 to 12.

Examples of the aminocarboxylic acid include 6-aminocaproic acid, 7-aminoheptanoic acid, 9-aminononanoic acid, 11-aminoundecanoic acid, and 12-aminododecanoic acid. Of these, from the viewpoint of the polymerization production, preferred is one member selected from the group consisting of 6-aminocaproic acid, 11-aminoundecanoic acid, and 12-aminododecanoic acid.

Examples of the lactam include 2-pyrrolidone, 2-piperidone, ε-caprolactam, enantholactam, undecanolactam, and lauryllactam.

Of these, from the viewpoint of the polymerization production, preferred is one member selected from the group consisting of ε-caprolactam, undecanolactam, and lauryllactam.

Examples of the aliphatic diamine include aliphatic diamines excluding alicyclic diamines, such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine; and alicyclic diamines, such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bis(aminomethyl)cyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbornanedimethyleneamine. The aliphatic diamines may be salts.

Of these, from the viewpoint of the polymerization production, an aliphatic diamine other than alicyclic diamines is preferred, and tetramethylenediamine, pentamethylenediamine, or hexamethylenediamine is more preferred.

Examples of the aliphatic dicarboxylic acid include aliphatic dicarboxylic acids excluding alicyclic dicarboxylic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid; and alicyclic dicarboxylic acids, such as 1,3-/1,4-cyclohexanedicarboxylic acid, dicyclohexanemethane-4,4'-dicarboxylic acid, and norbornanedicarboxylic acid. The aliphatic dicarboxylic acids may be salts.

Of these, an aliphatic dicarboxylic acid other than alicyclic dicarboxylic acids is preferred, and one member selected from the group consisting of adipic acid, sebacic acid, and dodecanedioic acid is more preferred, and adipic acid or dodecanedioic acid is even more preferred.

Examples of the combination of an aliphatic diamine and an aliphatic dicarboxylic acid include a combination of pentamethylenediamine and adipic acid, a combination of hexamethylenediamine and adipic acid, a combination of tetramethylenediamine and sebacic acid, a combination of pentamethylenediamine and sebacic acid, a combination of hexamethylenediamine and sebacic acid, and a combination of hexamethylenediamine and dodecanedioic acid, and equimolar salts of these combinations are preferably used.

Specific examples of the aliphatic homopolyamide resin (A-1) include polybutyrolactam (polyamide 4), polytetramethylene adipamide (polyamide 46), polytetramethylene azelamide (polyamide 49), polytetramethylene sebacamide (polyamide 410), polyvalerolactam (polyamide 5), polycaprolactam (polyamide 6), polyenantholactam (polyamide 7), polyundecanolactam (polyamide 11), polylauryllactam (polyamide 12), polypentamethylene adipamide (polyamide 56), polyhexamethylene adipamide (polyamide 66), polytetramethylene dodecamide (polyamide 412), polypentamethylene azelamide (polyamide 59), polypentamethylene sebacamide (polyamide 510), polypentamethylene dodecamide (polyamide 512), polypentamethylene tridecamide (polyamide 513), polyhexamethylene azelamide (polyamide 69), polyhexamethylene sebacamide (polyamide 610), polyhexamethylene dodecamide (polyamide 612), polynonamethylene adipamide (polyamide 96), polynonamethylene azelamide (polyamide 99), polynonamethylene sebacamide (polyamide 910), polynonamethylene dodecamide (polyamide 912), polydecamethylene adipamide (polyamide 106), polydecamethylene azelamide (polyamide 109), polydecamethylene decamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210), polydodecamethylene dodecamide (polyamide 1212), and polydodecamethylene oxamide (polyamide 122). The aliphatic homopolyamide resins (A-1) may be used individually or in combination of two or more thereof.

Of these, from the viewpoint of wear resistance, the aliphatic homopolyamide resin (A-1) is preferably an aliphatic homopolyamide resin (A-1-1), and from the viewpoint of mechanical physical properties, the aliphatic homopolyamide resin (A-1) is preferably an aliphatic homopolyamide resin (A-1-2), and from the viewpoint of productivity, the aliphatic homopolyamide resin (A-1-1) is more preferably at least one member selected from the group consisting of polyamide 6, polyamide 11, and polyamide 12. The aliphatic homopolyamide resin (A-1-2) is more preferably at least one member selected from the group consisting of polyamide 56, polyamide 66, polyamide 410, polyamide 510, polyamide 610, and polyamide 612.

### (A-2) Aliphatic copolyamide resin

The aliphatic copolyamide resin (A-2) is an aliphatic polyamide resin having two or more monomer components constituting the aliphatic polyamide resin and having no aromatic ring. Therefore, examples of the aliphatic copolyamide resin (A-2) include aliphatic copolyamide resins that are copolymers of two or more monomers selected from the group consisting of a combination of an aliphatic diamine and an aliphatic dicarboxylic acid, a lactam, and an aminocarboxylic acid. The combination of an aliphatic diamine and an aliphatic dicarboxylic acid is a monomer component composed of a condensate of an aliphatic diamine and an aliphatic dicarboxylic acid. Here, with respect to the combination of an aliphatic diamine and an aliphatic dicarboxylic acid, a combination of one kind of diamine and one kind of dicarboxylic acid is regarded as one kind of monomer. The term "aliphatic" is used to include alicyclic.

As examples of the aliphatic diamine, there can be mentioned the same as mentioned above as examples of the raw materials for the aliphatic homopolyamide resin (A-1). The aliphatic diamines may be used individually or appropriately in combination of two or more thereof. Of these, from the viewpoint of the polymerization productivity, preferred is at least one member selected from the group consisting of aliphatic diamines excluding alicyclic diamines, more preferred is at least one member selected from the group consisting of linear aliphatic diamines, and even more preferred is hexamethylenediamine.

As examples of the aliphatic dicarboxylic acid, there can be mentioned the same as mentioned above as examples of the raw materials for the aliphatic homopolyamide resin (A-1). The aliphatic dicarboxylic acids may be used individually or appropriately in combination of two or more thereof. Of these, preferred is an aliphatic dicarboxylic acid other than alicyclic dicarboxylic acids, more preferred is at least one member selected from the group consisting of adipic acid, sebacic acid, and dodecanedioic acid, and even more preferred is at least one member selected from the group consisting of adipic acid and dodecanedioic acid.

As examples of the lactam, there can be mentioned the same as mentioned above as examples of the raw materials for the aliphatic homopolyamide resin (A-1). The lactams may be used individually or appropriately in combination of two or more thereof.

Of these, from the viewpoint of the polymerization production, preferred is at least one member selected from the group consisting of ε-caprolactam, undecanolactam, and lauryllactam.

As examples of the aminocarboxylic acid, there can be mentioned the same as mentioned above as examples of the raw materials for the aliphatic homopolyamide resin (A-1). The aminocarboxylic acids may be used individually or appropriately in combination of two or more thereof.

Of these, from the viewpoint of the polymerization production, preferred is at least one member selected from the group consisting of 6-aminocaproic acid, 11-aminoundecanoic acid, and 12-aminododecanoic acid.

Specific examples of the aliphatic copolyamide resin (A-2) include aliphatic copolyamides, such as a caprolactam/hexamethylenediaminoadipic acid copolymer (polyamide 6/66), a caprolactam/hexamethylenediaminoazelaic acid copolymer (polyamide 6/69), a caprolactam/hexamethylenediaminosebacic acid copolymer (polyamide 6/610), a caprolactam/hexamethylenediaminoundecanoic acid copolymer (polyamide 6/611), a caprolactam/hexamethylenediaminododecanoic acid copolymer (polyamide 6/612), a caprolactam/aminoundecanoic acid copolymer (polyamide 6/11), a caprolactam/lauryllactam copolymer (polyamide 6/12), a caprolactam/hexamethylenediaminoadipic acid/lauryllactam copolymer (polyamide 6/66/12), a caprolactam/hexamethylenediaminoadipic acid/hexamethylenediaminosebacic acid copolymer (polyamide 6/66/610), a caprolactam/hexamethylenediaminoadipic acid/hexamethylenediaminododecanedicarboxylic acid copolymer (polyamide 6/66/612), and a hexamethylenediaminoadipic acid/caprolactam copolymer (polyamide 66/6). The aliphatic copolyamide resins (A-2) may be used individually or in combination of two or more thereof.

Of these, from the viewpoint of suppressing the water absorption of a molded article and maintaining the mechanical strength of the molded article, at least one member selected from the group consisting of polyamide 6/66, polyamide 6/12, and polyamide 6/66/12 is preferable, at least one member selected from the group consisting of polyamide 6/66 and polyamide 6/66/12 is more preferable, and polyamide 6/66 is particularly preferable.

From the viewpoint of productivity, the aliphatic polyamide resin (A) preferably has a constituent unit derived from an aminocarboxylic acid or a lactam or a constituent unit derived from a reaction product between a diamine and a dicarboxylic acid, and is more preferably an aliphatic homopolyamide resin (A-1), more preferably at least one member selected from the group consisting of polyamide 6, polyamide 11, polyamide 12, polyamide 56, polyamide 66, polyamide 410, polyamide 510, polyamide 610, and polyamide 612, more preferably polyamide 6 or polyamide 66.

The aliphatic polyamide resin (A) can be produced by polymerization performed by repeating operations under atmospheric pressure, reduced pressure, and increased pressure using a known method such as melt polymerization, solution polymerization, or solid phase polymerization and a known polyamide production apparatus such as a batch-type reaction vessel, a single-tank-type or multi-tank-type continuous reaction apparatus, a tubular continuous reaction apparatus, or a kneading reaction extruder such as a single-screw kneading extruder or a twin-screw kneading extruder. These polymerization methods can be used individually or appropriately in combination.

The relative viscosity of the aliphatic polyamide resin (A) is preferably 2.50 to 3.35, more preferably 2.55 to 3.35, even more preferably 2.60 to 3.30. When the relative viscosity is less than the above range, wear resistance is deteriorated and uneven molding is caused during molding. When the relative viscosity is more than the above range, fluidity is deteriorated and therefore moldability is poor. When the relative viscosity is within the above range, good fluidity is achieved and good wear resistance as well as good moldability is achieved. The relative viscosity is a value measured in accordance with JIS K 6920-2 by dissolving 1 g of the polyamide in 100 mL of 96% concentrated sulfuric acid and performing measurement at 25°C.

When the aliphatic polyamide resin (A) is a mixture of two or more aliphatic polyamide resins, the relative viscosity of the aliphatic polyamide resin (A) refers to the relative viscosity of the mixture. Therefore, when the aliphatic polyamide resin (A) contains two or more polyamide resins having different relative viscosities, the relative viscosity of the aliphatic homopolyamide resin (A) is preferably measured in such a manner as described above, but when the relative viscosities and mixing ratios of the respective polyamide resins are already known, an average calculated as a total of values obtained by respectively multiplying the relative viscosities by the mixing ratios can be used as the relative viscosity of the aliphatic polyamide resin (A). In the present invention, a measured value is adopted.

The terminal amino group concentration of the aliphatic polyamide resin (A), in terms of a terminal amino group concentration determined by neutralization titration with respect to the resin dissolved in a mixed solvent of phenol and methanol, is preferably more than 15.00 µmol/g to less than 50.00 µmol/g, more preferably 20.00 to 45.00 µmol/g, even more preferably 25.00 to 40.00 µmol/g. When the terminal amino group concentration is less than the above range, fluidity is deteriorated, and when the terminal amino group concentration is more than the above range, a resultant molded article is too hard and therefore wear resistance is deteriorated. When the terminal amino group concentration is within the above range, satisfactory molding processability, wear resistance, and mechanical physical properties can be obtained.

When the aliphatic polyamide resin (A) is a mixture of two or more aliphatic polyamide resins, the terminal amino group concentration of the aliphatic polyamide resin (A) refers to the terminal amino group concentration of the mixture. Therefore, when the aliphatic polyamide resin (A) contains two or more polyamide resins having different terminal amino group concentrations (for example, at least one aliphatic homopolyamide resin (A-1) and at least one aliphatic copolyamide resin (A-2)), it is preferred that the terminal amino group concentration of the polyamide resin (A) is measured by the above-mentioned neutralization titration, but when the terminal amino group concentrations and mixing ratios of the respective polyamide resins are already known, an average calculated as a total of values obtained by respectively multiplying the terminal amino group concentrations by the mixing ratios can be used as the terminal amino group concentration of the polyamide resin (A). In the present invention, a calculated value is adopted.

The aliphatic polyamide resin (A) may be one component or a combination of two or more aliphatic polyamide resin components, but from the viewpoint of the sliding property, the aliphatic polyamide resin (A) is preferably a combination of two or more aliphatic homopolyamide resins (A-1) having different terminal amino group concentrations, more preferably a combination of two or more aliphatic homopolyamide resins (A-1-1) having different terminal amino group concentrations, a combination of two or more aliphatic homopolyamide resins (A-1-2) having different terminal amino group concentrations, or a combination of one or two or more aliphatic homopolyamide resins (A-1-1) and one or two or more aliphatic homopolyamide resins (A-1-2). These combinations are preferably combinations in which the terminal amino group concentration of one of the aliphatic homopolyamide resins satisfies a preferred range of the terminal amino group concentration of the whole aliphatic polyamide resin (A).

Further, these combinations are more preferably combinations of an aliphatic homopolyamide resin (A-1-2) having a terminal amino group concentration lower than that of the whole aliphatic polyamide resin (A) and an aliphatic homopolyamide resin (A-1-2) having a terminal amino group concentration higher than that of the whole aliphatic polyamide resin (A), and it is particularly preferred that the content of the former is higher than the content of the latter.

The amount of the aliphatic polyamide resin (A) blended in the polyamide resin composition is preferably 68 to 88% by mass, more preferably 70 to 85% by mass, even more preferably 70 to 80% by mass, based on 100% by mass of the polyamide resin composition. When the blending amount of the polyamide resin (A) is within the above range, good mechanical physical properties and molding processability are achieved.

### <Molecular weight of polyamide resin>

The polyamide resin contained in the polyamide resin composition is characterized by its molecular weight described below.

For all polyamide resins in the polyamide resin composition, based on a total peak area calculated in terms of poly(methyl methacrylate) standards using gel permeation chromatography, the proportion of peak area of a polyamide resin having a molecular weight of 30,000 or less is 22.00 to 30.00 area%, preferably 22.20% to 30.00 area%, more preferably 22.50 to 30.00 area%, and based on a total peak area calculated with poly(methyl methacrylate) standards using gel permeation chromatography, the proportion of peak area of a polyamide resin having a molecular weight of 100,000 or more is 14.00 to 27.00 area%, preferably 14.00 to 25.00 area%, more preferably 14.00 to 23.00 area%.

When the proportion of the polyamide resin having a molecular weight of 30,000 or less as calculated in terms of poly(methyl methacrylate) standards using gel permeation chromatography is within the above range and the proportion of the polyamide resin having a molecular weight of 100,000 or more as calculated in terms of poly(methyl methacrylate) standards using gel permeation chromatography is within the above range, the wear resistance of a molded article obtained from the polyamide resin composition can be improved.

The molecular weight distribution (weight average molecular weight (Mw)/number average molecular weight (Mn)) of all the polyamide resins in the polyamide resin composition is 4.00 to 8.50, preferably 4.15 to 7.50, more preferably 4.30 to 6.50.

When the molecular weight distribution (Mw/Mn) is within the above range, the fluidity of the polyamide resin composition can be improved.

When the proportion of the polyamide resin having a molecular weight of 30,000 or less is within the above range, the proportion of the polyamide resin having a molecular weight of 100,000 or more is within the above range, and the molecular weight distribution (Mw/Mn) is within the above range, mechanical strength suitable for sliding applications can be maintained.

In order to allow the proportion of the polyamide resin having a molecular weight of 30,000 or less to fall within the above range, to allow the proportion of the polyamide resin having a molecular weight of 100,000 or more to fall within the above range, and to allow the molecular weight distribution (Mw/Mn) to fall within the above range, production conditions and a production mode can be appropriately selected so that such ranges are satisfied, and such ranges can be satisfied by, for example, mixing a plurality of lots of a polyamide resin produced in a batch manner or continuously producing a polyamide resin while adjusting/changing production conditions (e.g., temperature and pressure).

The molecular weight, the number average molecular weight (Mn), and the weight average molecular weight (Mw) can be measured using gel permeation chromatography (GPC). The detailed conditions of gel permeation chromatography are as described in Examples.

### <Glass fibers (B) coated with sizing agent containing polyurethane resin and copolymer having acidic group>

Glass fibers (B) coated with a sizing agent are blended in the polyamide resin composition. The sizing agent contains a polyurethane resin and a copolymer having an acidic group. The glass fibers (B) coated with a sizing agent containing a polyurethane resin and a copolymer having an acidic group are a component that imparts excellent sliding properties and mechanical properties to the polyamide resin composition.

### [Glass fibers]

Examples of the glass constituting the glass fibers include those having a composition of A-glass, AR-glass, C-glass, D-glass, E-glass, H-glass, S-glass, T-glass, M-glass, NE-glass, or the like.

The shape of the glass fibers is not particularly limited, and examples thereof include flat fibers and chopped strands. The shape of the section of the glass fibers is not particularly limited, and examples thereof include a perfect circle, an ovaloid, an oval, a rectangle, and a similar shape thereof. The fibers refer to a shape having an aspect ratio (ratio of long diameter/short diameter) of 10 or more. The glass fibers (B) are broken when melt-kneaded with other components. Therefore, as long as the glass fibers (B) satisfy the definition of "fibers" in the present specification at the time of start of blending, the glass fibers (B) in the polyamide resin composition also include those which are broken by melt-kneading and, as a result, no longer satisfy the definition of "fibers" in the present specification.

The average fiber diameter of the glass fibers at the time of start of blending and in the polyamide resin composition is preferably 5.0 µm to 12.0 µm. When the average fiber diameter of the glass fibers is within the above range, the sliding property is excellent, and the wear amount is reduced. The average fiber diameter of the glass fibers is a value measured with an optical microscope and may be a catalog value when a commercially available product is used. The average fiber diameter of the glass fibers (B) coated with a sizing agent is also preferably in the same range described above.

When the section of the glass fibers is rectangular or similar, the length of one side of the section is preferably 0.5 µm to 50 µm, more preferably 1 to 40 µm. The number average fiber length of the glass fibers at the time of start of blending is preferably 2000 µm to 4000 µm, more preferably 2500 µm to 3500 µm. The polyamide resin composition is produced by melt-kneading, and therefore the size of the glass fibers is changed in such a process due to, for example, breakage of the glass fibers. Therefore, the number average fiber length of the glass fibers in the polyamide resin composition is preferably 100 µm to 450 µm, more preferably 200 µm to 350 µm. The weight average fiber length of the glass fibers in the polyamide resin composition is preferably 150 µm to 550 µm, more preferably 250 µm to 450 µm. The number average fiber length and the weight average fiber length of the glass fibers can be determined from an image photographed using a transmission microscope using image analysis software. The aspect ratio obtained by dividing the number average fiber length by the average fiber diameter of the glass fibers in the polyamide resin composition is preferably 10 or more, more preferably 15 to 100, particularly preferably 30 to 70 from the viewpoint of rigidity, mechanical strength, and fluidity. The number average fiber length and weight average fiber length of the glass fibers (B) coated with a sizing agent are also preferably in the same ranges described above, respectively. The "glass fibers in the polyamide resin composition" refer to glass fibers in the polyamide resin composition obtained by melt-kneading the components.

### [Sizing agent]

The glass fibers are coated with a sizing agent containing a polyurethane resin and a copolymer having an acidic group. The sizing agent refers to a composition that is to be applied to the surface of glass fibers for the purpose of organification of the glass fiber surface and that contains a resin and other optional components described later, such as a coupling agent, water, and an organic solvent. The sizing agent is not always used to combine a plurality of glass fibers and may be applied to the surface of one glass fiber. The glass fibers are surface-treated by being coated with the sizing agent. The term "coated" means that the sizing agent is attached to at least part of the surface of at least one glass fiber. The glass fibers may be subjected to sizing treatment in which two or more glass fibers are combined into one by the sizing agent. The sizing treatment can also be performed by applying the sizing agent to a plurality of glass fiber monofilaments formed by drawing out molten glass from a plurality of nozzles, then bundling the glass fiber monofilaments into one glass fiber strand, and then winding the glass fiber strand as a cake.

### [Polyurethane resin]

The polyurethane resin is a resin obtained by subjecting a polyol component and a polyisocyanate component to a urethane reaction.

### <<Polyol component>>

Examples of the polyol component include polyester polyols (condensation-based polyester polyols and lactone-based polyester polyols), polycarbonate polyols, and polyether polyols.

Examples of the condensation-based polyester polyols include those obtained by reacting a dicarboxylic acid or a lower alkyl ester thereof with an aliphatic diol. Here, examples of the dicarboxylic acid or a lower alkyl ester thereof include adipic acid, succinic acid, azelaic acid, pimelic acid, sebacic acid, and phthalic acid or lower alkyl esters thereof. Examples of the aliphatic diol include aliphatic diols having no side chain, such as ethylene glycol, 1,4-butanediol, 1,6-hexanediol, and 1,10-decamethylene glycol, and aliphatic diols having a side chain, such as 1,2-propylene glycol, 1,3-butanediol, 2,5-dimethyl-2,5-hexanediol, 2,2-diethyl-1,3-propanediol, and neopentyl glycol.

Examples of the lactone-based polyester polyols include products obtained by reacting a lactone compound such as β-propiolactone, pivalolactone, δ-valerolactone, ε-caprolactone, methyl-ε-caprolactone, dimethyl-ε-caprolactone, or trimethyl-ε-caprolactone with a hydroxy compound such as a short-chain polyol.

As the polycarbonate polyols, those obtained by a transesterification reaction from a hydroxy compound such as a short-chain polyol and diallyl carbonate, a dialkyl carbonate, or ethylene carbonate are used. For example, poly-1,6-hexamethylene carbonate, poly-2,2'-bis(4-hydroxyhexyl)propane carbonate, and the like are industrially produced and easily available. As another method for obtaining the polycarbonate polyol, what is called a phosgene method (or solvent method) can be used.

Examples of the polyether polyols include polyethylene glycol, polypropylene glycol, polytetramethylene glycol, polyoxypropylene glycol, and glycerin-based polyalkylene ether glycols.

### <<Polyisocyanate component>>

Examples of the polyisocyanate include aliphatic polyisocyanates, alicyclic polyisocyanates, and aromatic polyisocyanates.

Examples of the aliphatic polyisocyanates include ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl) carbonate, and 2-isocyanatoethyl-2,6-diisocyanatohexanoate.

Examples of the alicyclic polyisocyanates include isophorone diisocyanate (IPDI), 4,4'-dicyclohexylmethane diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, and 2,6-norbornane diisocyanate.

Examples of the aromatic polyisocyanates include 1,3-phenylene diisocyanate, 1,4-phenylene diisocyanate, 2,4-tolylene diisocyanate (TDI), 2,6-tolylene diisocyanate, 4,4'-diphenylmethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonyl isocyanate, p-isocyanatophenylsulfonyl isocyanate, 1-methyl-2,6-phenylene diisocyanate, 1-methyl-2,5-phenylene diisocyanate, 1-methyl-2,6-phenylene diisocyanate, 1-methyl-3,5-phenylene diisocyanate, 1-ethyl-2,4-phenylene diisocyanate, 1-isopropyl-2,4-phenylene diisocyanate, 1,3-dimethyl-2,4-phenylene diisocyanate, 1,3-dimethyl-4,6-phenylene diisocyanate, 1,4-dimethyl-2,5-phenylene diisocyanate, diethylbenzene diisocyanate, diisopropylbenzene diisocyanate, 1-methyl-3,5-diethylbenzene diisocyanate, 3-methyl-1,5-diethylbenzene-2,4-diisocyanate, 1,3,5-triethylbenzene-2,4-diisocyanate, naphthalene-1,4-diisocyanate, 1-methyl-naphthalene-1,5-diisocyanate, naphthalene-2,6-diisocyanate, naphthalene-2,7-diisocyanate, 1,1-dinaphthyl-2,2'-diisocyanate, biphenyl-2,4'-diisocyanate, 3,3'-dimethylbiphenyl-4,4'-diisocyanate, and 2,2'-diphenylmethane diisocyanate.

The polyisocyanate is preferably a diisocyanate having two isocyanato groups per molecule.

In the urethanization reaction, a chain extender such as a polyhydric alcohol or a polyhydric amine can also be used.

### [Copolymer having acidic group]

Examples of the copolymer having an acidic group include a copolymer of a monomer having an acidic group, and a copolymer of a monomer having an acidic group and a monomer not having an acidic group.

In the present specification, the acidic group refers to a group that releases a proton, and examples thereof include a carboxyl group, a sulfonic acid group, a phosphoric acid group, and a phenolic hydroxyl group, and a hydroxyl group (excluding a phenolic hydroxyl group) is not included in the acidic group.

Examples of the monomer having an acidic group include unsaturated carboxylic acids and carboxylic anhydrides. Examples of the unsaturated carboxylic acids include acrylic acid, maleic acid, fumaric acid, tetrahydrophthalic acid, itaconic acid, mesaconic acid, citraconic acid, crotonic acid, isocrotonic acid, and endo-cis-bicyclo[2,2,1]hept-5-ene-2,3-dicarboxylic acid. Examples of the carboxylic anhydrides include dicarboxylic anhydrides such as maleic anhydride, itaconic anhydride, succinic anhydride, phthalic anhydride, glutaric anhydride, dodecenylsuccinic anhydride, chlorendic anhydride, and citraconic anhydride. The carboxylic anhydride is preferably maleic anhydride because it shows little steric hindrance during copolymerization and the polarity of the compound is small. In addition, the monomer having an acidic group may be a monomer having a functional group having a function equivalent to an acidic group, examples of such a functional group include an acid halide, an amide, an imide, and an ester of the unsaturated carboxylic acid, and examples of the monomer having a functional group having a function equivalent to an acidic group include malenyl chloride, maleimide, monomethyl maleate, dimethyl maleate, and glycidyl maleate. These monomers may be used individually or in combination of two or more thereof.

Examples of the monomer having no acidic group include styrene, ethylene, and acetylene.

A constituent unit derived from a monomer having an acidic group in the copolymer having an acidic group contained in the sizing agent is preferably a constituent unit derived from an unsaturated carboxylic acid and/or carboxylic anhydride. The copolymer having an acidic group more preferably contains a copolymer obtained by copolymerizing an unsaturated carboxylic acid and/or a carboxylic anhydride, methyl acrylate, and methyl methacrylate.

The weight average molecular weight of the copolymer is preferably 10,000 to 60,000, particularly preferably 20,000 to 50,000 from the viewpoint of reactivity in producing the copolymer and mechanical properties. The weight average molecular weight of the copolymer is a molecular weight measured by gel permeation chromatography (GPC).

### [Other optional components of sizing agent]

The sizing agent may contain additional components in addition to the polyurethane resin and the copolymer having an acidic group. Examples of the additional components include a coupling agent, a lubricant, a nonionic surfactant, an antistatic agent, water, and an organic solvent. Examples of the lubricant include fatty acid amides and quaternary ammonium salts. Examples of the nonionic surfactant include synthetic alcohol-based surfactants, natural alcohol-based surfactants, and fatty acid ester-based surfactants. Water and the organic solvent are components that dissolve a lubricant, a nonionic surfactant, an antistatic agent, and the like. Examples of the organic solvent include ethanol and the like.

The content of each component in the sizing agent can be appropriately set according to the properties of the glass fibers to be obtained.

The glass fibers (B) coated with a sizing agent may be surface-treated with an additional component. Examples of such a component include additional components contained in the sizing agent.

The sizing agent containing a polyurethane resin and a copolymer having an acidic group may contain components disclosed in JP 2014-231452 A in addition to the above-described components.

The glass fibers (B) coated with a sizing agent containing a polyurethane resin and a copolymer having an acidic group may be one component or a combination of two or more components.

From the viewpoint of delivering strength-improving performance, the ignition loss of the sizing agent as measured by completely vaporizing volatile substances is preferably 0.1 to 1.5% by mass, more preferably 0.4 to 1.2% by mass. The ignition loss of the sizing agent is a value measured according to JIS R 3420 (2006) 7.3.2.

The acidic group in the copolymer having an acidic group in the sizing agent coating the glass fibers is considered to interact with a terminal amino group in the polyamide resin contained in the aliphatic polyamide resin (A). Improving the interaction makes it possible to improve fatigue strength, but when the interaction is too strong, the polyamide resin composition becomes hard so that the wear amount may conversely increase.

In order to make the interaction appropriate, the terminal amino group concentration of the aliphatic polyamide resin (A) is preferably adjusted. Further, the amount of the acidic group in the sizing agent coating the glass fibers is also preferably adjusted.

From the viewpoint of making the interaction appropriate and achieving good dispersion of the glass fibers in the polyamide resin, the content of the copolymer having an acidic group is preferably 0.5 to 10.0% by mass, more preferably 1.0 to 8.0% by mass, based on 100% by mass of the sizing agent.

From the viewpoint of making the interaction appropriate, based on 100% by mass of all the constituent units of the copolymer having an acidic group contained in the sizing agent, the constituent unit derived from a monomer having an acidic group is in an amount of preferably 10 to 99% by mass, more preferably 20 to 60% by mass, even more preferably 25 to 55% by mass.

The content of the glass fibers (B) coated with a sizing agent based on 100% by mass of the polyamide resin composition is preferably 5 to 30% by mass, more preferably 10 to 30% by mass, even more preferably 15 to 30% by mass, based on 100% by mass of the polyamide resin composition. The blending amount of the glass fibers (B) within the above range is preferred from the viewpoint of mechanical properties, sliding properties, and molding processability.

### <Optional component>

The polyamide resin composition can contain an optional component other than the component (A) and the component (B) as long as the effects of the present invention are not impaired.

Examples of the optional component include resins other than the component (A) and function imparting agents.

Examples of the resins other than the component (A) include aromatic polyamide resins, semi-aromatic polyamide resins, polyolefin resins such as lowdensity, medium-density, and high-density polyethylene, polypropylene, and polybutene, modified polyolefin resins, polyester resins such as polyethylene terephthalate, polybutylene terephthalate, and polyester-based elastomers, vinyl aromatic resins such as polystyrene, ABS resins, and AS resins, polyether-based resins, polyurethane resins, acrylic resins, polyimide-based resins, polycarbonate-based resins, polyacetal, polyvinyl alcohol, and rosin-based resins.

The resin other than the component (A), when blended, is in an amount of preferably 0.01 to 2.0% by mass, more preferably 0.05 to 1.5% by mass, even more preferably 0.1 to 1.0% by mass, based on 100% by mass of the polyamide resin composition, from the viewpoint of not impairing the functions and properties of the polyamide resin composition.

Examples of the function imparting agents include various additives usually blended in polyamide resin compositions. Specific examples of the function imparting agents include a plasticizer, a heat-resisting agent, a foaming agent, a weathering agent, a crystal nucleating agent, an antioxidant, a crystallization accelerator, a release agent, a lubricant, an antistatic agent, a dispersant, a flame retardant, a flame retardant auxiliary, a pigment, and a dye.

In the case where the function imparting agent is a heat-resisting agent, organic or inorganic heat-resisting agents can be used as the heat-resisting agent according to the purpose, and these may be used individually or in combination of two or more thereof. The heat-resisting agent refers to a component that suppresses thermal oxidation and thermal degradation of the polyamide resin, and also includes what is called an antioxidant added for that purpose.

Examples of the organic heat-resisting agents include a phenol-based compound, a phosphorus-based compound, a sulfur-based compound, and a nitrogenbased compound. These compounds may be used individually or in combination of two or more thereof.

Preferred examples of the phenol-based compound include hindered phenol-based compounds. In the present specification, the term "hindered phenol" means a phenolic compound having a substituent at the ortho-position with respect to the hydroxy group of phenol.

Preferable examples of the phosphorus-based compound include a phosphorous acid ester compound of a hindered phenol and a hypophosphorous acid ester compound of a hindered phenol.

The heat-resisting agent is preferably a combination of an inorganic compound and an inorganic compound or a combination of an inorganic compound and a nitrogen-containing compound.

Examples of the inorganic compound include metal halides and inorganic compounds other than metal halides.

The metal halide is a compound of a halogen and a metal. Examples of the halogen include fluorine, chlorine, bromine, and iodine. Examples of the metal include Group 1 elements (alkali metals), Group 2 elements (alkaline earth metals), and Groups 3 to 12 elements (such as transition metals). The metal in the metal halide is preferably a metal of Group 1 elements (alkali metals) or Group 11 elements (copper group), more preferably a combination of them. Examples of the metal halide in the case where the metal is a Group 1 element (alkali metal) include potassium iodide, potassium bromide, potassium chloride, sodium iodide, and sodium chloride. Examples of the metal halide in the case where the metal is a Group 11 element (copper group) include cuprous chloride, cupric chloride, cuprous bromide, cupric bromide, cuprous iodide, and cupric iodide. The metal halide is particularly preferably potassium iodide and/or cuprous iodide.

Examples of the nitrogen-containing compound include melamine, benzoguanamine, dimethylolurea, and cyanuric acid.

In the case where the heat-resisting agent is blended, the amount of the heat-resisting agent blended in the polyamide resin composition is preferably 0.01 to 2.00% by mass, more preferably 0.05 to 1.00% by mass, even more preferably 0.10 to 0.50% by mass, based on 100% by mass of the polyamide resin composition.

The release agent may be a higher fatty acid compound. The higher fatty acid compound is preferably at least one member selected from the group consisting of a higher fatty acid ester, a higher fatty acid amide, and a higher fatty acid salt.

Examples of the function imparting agent other than those described above include metals, metal oxides, metal hydroxides, metal nitrides, metal phosphates, metal phosphites, metal carbonates, metal silicates, metal titanates, metal borates, metal sulfates, and metal nitrates. Specific examples of the inorganic compound other than the metal halide include talc, mica, synthetic mica, glass flakes, nonswelling mica, fullerene, carbon nanotubes, carbon black, graphite, metal foils, ceramic beads, clay, sericite, zeolite, bentonite, aluminum hydroxide, dolomite, kaolin, silica, fine powdered silicate, feldspar powder, potassium titanate, shirasu balloons, calcium carbonate, magnesium carbonate, barium sulfate, calcium oxide, aluminum oxide, titanium oxide, magnesium oxide, aluminum silicate, silicon oxide, magnesium hydroxide, gypsum, novaculite, dawsonite, white clay, glass fibers, carbon fibers, graphite fibers, metal fibers, potassium titanate whiskers, aluminum borate whiskers, magnesium-based whiskers, silicon-based whiskers, wollastonite, sepiolite, slag fibers, xonotlite, ellestadite, gypsum fibers, silica fibers, silica-alumina fibers, zirconia fibers, boron nitride fibers, silicon nitride fibers, boron fibers, and other components disclosed in JP 2002-370551 A.

The optional components may each be one component or a combination of two or more components.

### <Method for producing polyamide resin composition>

A method for producing the polyamide resin composition is not particularly limited as long as the components can be kneaded, and examples thereof include production methods using a twin-screw extruder, a single-screw extruder, a multi-screw extruder, or the like. For example, any method may be used, such as a method in which all raw materials are blended and then melt-kneaded using a twin-screw extruder, a method in which some raw materials are blended and then melt-kneaded, and the remaining raw materials are further blended and melt-kneaded, or a method in which some raw materials are blended, and then the remaining raw materials are mixed using a side feeder during melt-kneading.

### [Applications of polyamide resin composition and the like]

The polyamide resin composition can be used without any limitation for production of a molded article using a known method such as injection molding, extrusion molding, blow molding, rotational molding, vacuum molding, or pressure molding. A molded article containing the polyamide resin composition can be used for a part requiring the sliding property. Examples of the part required to have the sliding property include parts intended for dynamic applications such as gears, cams, pulleys, bearings, bearing retainers, door checks, timing chain guides, and cable/hose support/guide devices. The polyamide resin composition may be used for other members requiring similar functions.

### A second aspect of the present invention is as follows.

A polyamide resin composition including:
an aliphatic polyamide resin (A) and glass fibers (B) coated with a sizing agent,
in which the aliphatic polyamide resin (A) has a relative viscosity of 2.50 to 3.35 as measured by dissolving 1 g of the aliphatic polyamide resin (A) in 100 mL of 96% concentrated sulfuric acid and performing measurement at 25°C in accordance with JIS K6920-2,
the aliphatic polyamide resin (A) has a terminal amino group concentration of more than 15.00 µmol/g to less than 50.00 µmol/g, and
the sizing agent contains a polyurethane resin and a copolymer having an acidic group.

The molecular weight distribution (weight average molecular weight (Mw)/number average molecular weight (Mn)) of all polyamide resins in the polyamide resin composition is preferably 4.00 to 8.50, more preferably 4.15 to 7.50, even more preferably 4.30 to 6.50.

For all polyamide resins in the polyamide resin composition, based on a total peak area calculated in terms of poly(methyl methacrylate) standards using gel permeation chromatography, the proportion of peak area of a polyamide resin having a molecular weight of 30,000 or less is preferably 22.00 to 30.00 area%, more preferably 22.20% to 30.00 area%, even more preferably 22.50 to 30.00 area%, and based on a total peak area calculated with poly(methyl methacrylate) standards using gel permeation chromatography, a proportion of peak area of a polyamide resin having a molecular weight of 100,000 or more is preferably 14.00 to 27.00 area%, more preferably 14.00 to 25.00 area%, even more preferably 14.00 to 23.00 area%.

Preferred aspects of the polyamide resin, the sizing agent, and the glass fibers and measurement methods of the above values are the same as those described with reference to the first aspect of the present invention.

### [Examples]

Hereinbelow, the present invention will be described in more detail with reference to Examples and Comparative Examples, which should not be construed as limiting the scope of the present invention.

### <<Measurement methods and evaluations>>

The symbol "○" means "passed" and the symbol "×" means "failed".

### (1) Percentage of molecular weight, number average molecular weight (Mn), weight average molecular weight (Mw), molecular weight distribution (Mw/Mn)

A percentage of molecular weight, a number average molecular weight (Mn), and a weight average molecular weight (Mw) were calculated in terms of poly(methyl methacrylate) (PMMA) standards by GPC (gel permeation chromatography) (HLC-8420 manufactured by Tosoh Corporation). The concentration of a measurement sample was set to 0.05 wt/vol%, a mixture of hexafluoro-2-propanol and 10 mM sodium trifluoroacetate was used as a solvent, the flow rate was set to 0.8 mL/min, two columns, KF-805L (trade name) manufactured by Shodex were connected in series, the injected amount was set to 100 µL, the column temperature was set to 40°C, and a differential refractive index meter (RI) was used as a detector.

The percentage of molecular weight was determined by calculating the percentage of the area of the molecular weight to the total area of peaks obtained by the measurement.

### (2) Tensile strength

An A-type test piece was prepared according to ISO 294-1, and a tensile test was performed in an atmosphere of 23°C according to ISO 527-1,2.
○: The tensile strength is 174.0 MPa or more and therefore mechanical strength is excellent.
×: The tensile strength is less than 174.0 MPa and therefore mechanical strength is poor.

### (3) Fluidity

Pellets of each of Examples and Comparative Examples were injection-molded using an injection molding machine (manufactured by NISSEI PLASTIC INDUSTRIAL CO., LTD., trade name; PS40E) equipped with a bar-flow mold having a cavity thickness of 1 mm, a width of 15 mm, and a length of 360 mm under molding conditions of an injection pressure of 100 MPa, a cylinder temperature of 290°C, a mold temperature of 80°C, an injection speed of 38 mm/sec, an injection time of 4 seconds, and a cooling time of 15 seconds. The total length of a molded article obtained by injection molding was measured from the outlet of a gate as an L/T flow length. The fluidity of the polyamide resin composition was evaluated according to the following criteria.
○: The L/T flow length is 50.0 mm or more and therefore fluidity is excellent.
×: The L/T flow length is less than 50.0 mm and therefore fluidity is poor.

### (4) Fatigue strength

A test piece based on ASTM D 671 was prepared, and a fatigue test was performed according to ASTM D671 Method B using a bending fatigue test machine (manufactured by Toyo Seiki Seisaku-sho, Ltd, trade name: B-70-T-40+200) in an atmosphere of 90°C under vibration conditions of a constant stress amplitude, a sine wave, a stress ratio of -1, and a frequency of 30 Hz. A set stress when the number of cycles could reach 10000000 was regarded as fatigue strength.
○: The fatigue strength is 35.0 MPa or more and is therefore excellent.
×: The fatigue strength is less than 35.0 MPa and is therefore poor.

### (5) Wear resistance

In order to determine the wear amount of the sliding part, the wear amount of the polyamide resin composition with respect to carbon steel was measured as follows.

Test pieces measuring 60 mm × 40 mm × 3 mm of the polyamide resin compositions of Examples and Comparative Examples were prepared using SE100D-C160S injection molding machine manufactured by Sumitomo Heavy Industries, Ltd. The wear volume of the polyamide sliding surface of the test piece was measured after a reciprocating test was performed using a friction wear tester (UMT-TriboLAB manufactured by Bruker) and a pin of SR10 made of SUJ2 carbon steel specified in JIS G4805 on the test piece for 6 hours (324000 cycles) under conditions of a test load of 10 N, a frequency of 15 Hz, and a stroke of 10 mm. The wear volume was measured using a 3D shape measuring machine (VR3200 manufactured by KEYENCE CORPORATION).
○: The polyamide wear volume is less than 1.90 mm³ and therefore wear resistance is excellent.
×: The polyamide wear volume is 1.90 mm³ or more and therefore wear resistance is poor.

### (6) Average fiber diameter, number average fiber length, weight average fiber length

The average fiber diameter of the glass fibers in the polyamide resin composition was measured with an optical microscope. The number average fiber length and the weight average fiber length of the glass fibers in the polyamide resin composition were calculated from 1000 or more fibers in an image photographed using a transmission microscope using image analysis software.

The components used in the Examples and Comparative Examples are as follows.
PA66 (1): Polyamide 66, relative viscosity: 2.40, terminal amino group concentration: 59.0 µmol/g, manufactured by Asahi Kasei Corp.
PA66 (2): Polyamide 66, relative viscosity: 2.73, terminal amino group concentration 50.0 µmol/g, manufactured by Asahi Kasei Corp.
PA66 (3): Polyamide 66, relative viscosity: 3.73, terminal amino group concentration: 15.0 µmol/g, manufactured by Asahi Kasei Corp.
PA6 (1): Polyamide 6, relative viscosity: 2.47, terminal amino group concentration: 44.5 µmol/g, manufactured by UBE Corporation
PA6 (2): Polyamide 6, relative viscosity: 2.96, terminal amino group concentration: 30.0 µmol/g, manufactured by UBE Corporation
PA6 (3): Polyamide 6, relative viscosity: 4.05, terminal amino group concentration: 32.0 µmol/g, manufactured by UBE Corporation
Glass fibers (1): round-chopped, ECS03T-249H, Φ 10.5 microns (manufactured by Nippon Electric Glass Co., Ltd., average fiber diameter: 10.5 µm, coated with sizing agent containing polyurethane resin and not containing copolymer having acidic group)
Glass fibers (2): round-chopped, CS 3DE-456S, Φ 6.5 microns (manufactured by NITTO BOSEKI CO., LTD., average fiber diameter: 6.5 µm, coated with sizing agent containing polyurethane resin and not containing copolymer having acidic group)
Glass fibers (3): round-chopped, ECS03T-211H, Φ 10.5 microns (manufactured by Nippon Electric Glass Co., Ltd., average fiber diameter: 10.5 µm, coated with sizing agent containing polyurethane resin and copolymer having acidic group)
Glass fibers (4): round-chopped, ECS03T-211DE, Φ 6.5 microns (manufactured by Nippon Electric Glass Co., Ltd., average fiber diameter: 6.5 µm, coated with sizing agent containing polyurethane resin and copolymer having acidic group)
CuI/KI as heat-resisting agent: cuprous iodide/potassium iodide = 1/6 (mixture, mass ratio)

The relative viscosities of polyamide 66 and polyamide 6 are values measured in accordance with JIS K6920-2 by dissolving 1 g of the polyamide in 100 mL of 96% concentrated sulfuric acid and performing measurement at 25°C.

The terminal amino group concentrations of polyamide 66 and polyamide 6 were determined by dissolving the polyamide resin in a mixed solvent of phenol and methanol and subjecting the resultant solution to neutralization titration.

When the polyamide resin was a mixture of two or more polyamide resins, the relative viscosity of the whole polyamide resin was determined in accordance with JIS K6920-2 by dissolving 1 g of the polyamide in 100 mL of 96% concentrated sulfuric acid and performing measurement at 25°C.

When the polyamide resin was a mixture of two or more polyamide resins, the terminal amino group concentration of the whole polyamide resin was determined by calculating, as an average, a total of values obtained by respectively multiplying the terminal amino group concentrations of the polyamide resins measured by the above method by the mixing ratios of the polyamide resins.

The average fiber diameter of the glass fibers is a catalog value.

### [Examples 1 to 5, Comparative Examples 1 to 5, 7, Reference Example 6]

The components shown in Table 1 were melt-kneaded with a ZSK32Mc twin-screw kneader manufactured by Coperion to produce intended polyamide resin composition pellets. When there is no description about evaluation methods, the obtained pellets were injection-molded at a cylinder temperature of 290°C and a mold temperature of 80°C to produce various test pieces, and various physical properties were evaluated.

In Table 1, the content of each of the components is a value determined by taking the total mass of the polyamide resin composition as 100% by mass.

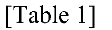

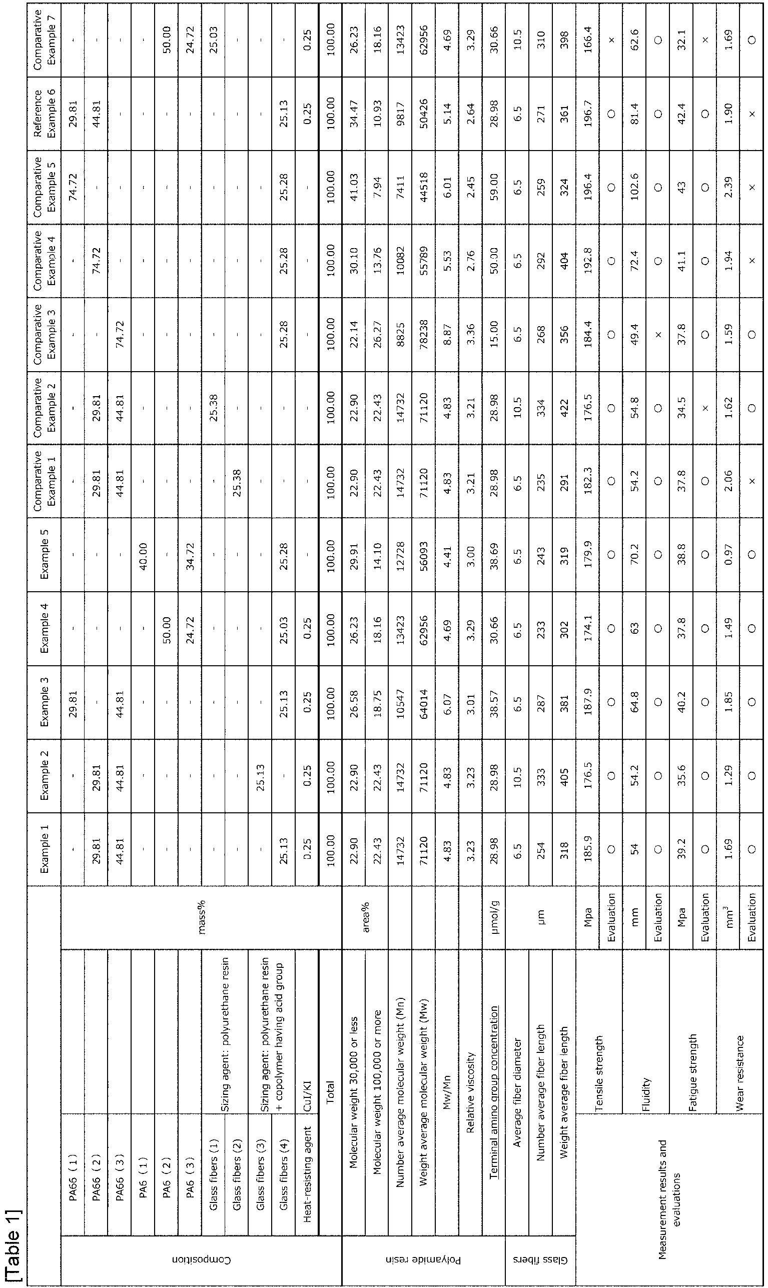

In Examples 1 to 5, the tensile strength, the fluidity, the fatigue strength, and the wear resistance are all excellent.

In Comparative Example 1, the sizing agent coating the glass fibers does not contain the copolymer having an acidic group, and therefore the wear resistance is poor. In Comparative Example 2, the sizing agent coating the glass fibers does not contain the copolymer having an acidic group, and therefore the fatigue strength is poor. The reason why there is a difference between the result of Comparative Example 1 and the result of Comparative Example 2 is considered to be that the glass fibers have different average fiber diameters. In Comparative Example 7, the sizing agent coating the glass fibers does not contain the copolymer having an acidic group, and therefore the tensile strength and the fatigue strength are poor. Since Example 4 and Comparative Example 7 are the same in the composition of the polyamide resin, the composition of the sizing agent is considered to influence the tensile strength and the fatigue strength.

In Comparative Example 3, the molecular weight distribution does not satisfy the requirement of the present invention, and therefore the fatigue strength is poor. In Comparative Examples 4 and 5, the proportion of the polyamide resin having a molecular weight of 30,000 or less is higher than the range of the present invention and the proportion of the polyamide resin having a molecular weight of 100,000 or more is lower than the range of the present invention, and therefore the wear resistance is poor. In Reference Example 6, the proportion of a polyamide resin having a molecular weight of 30,000 or less is higher than the range of the present invention and the proportion of a polyamide resin having a molecular weight of 100,000 or more is lower than the range of the present invention, but the relative viscosity and the terminal amino group concentration are within their respective specific ranges, and therefore the degree of poorness of the wear resistance is small.

### [Industrial Applicability]

The polyamide resin composition of the present invention is suitably used as a molded article for a part requiring the sliding property.

## Claims

1. A polyamide resin composition comprising:
an aliphatic polyamide resin (A); and
glass fibers (B) coated with a sizing agent,
wherein, for all polyamide resins in the polyamide resin composition,
based on a total peak area calculated in terms of poly(methyl methacrylate) standards using gel permeation chromatography, a proportion of peak area of a polyamide resin having a molecular weight of 30,000 or less is 22.00 to 30.00 area%, and a proportion of peak area of a polyamide resin having a molecular weight of 100,000 or more is 14.00 to 27.00 area%,
a molecular weight distribution (weight average molecular weight (Mw)/number average molecular weight (Mn)) of all the polyamide resins in the polyamide resin composition is 4.00 to 8.50, and
the sizing agent contains a polyurethane resin and a copolymer having an acidic group.

2. The polyamide resin composition according to claim 1, wherein the aliphatic polyamide resin (A) has a relative viscosity of 2.50 to 3.35 as measured by dissolving 1 g of the aliphatic polyamide resin (A) in 100 mL of 96% concentrated sulfuric acid and performing measurement at 25°C in accordance with JIS K6920-2, and
the aliphatic polyamide resin (A) has a terminal amino group concentration of more than 15.00 µmol/g to less than 50.00 µmol/g.

3. The polyamide resin composition according to claim 1, wherein the polyamide resin composition comprises 68 to 88% by mass of the aliphatic polyamide resin (A) and 5 to 30% by mass of the glass fibers (B) coated with a sizing agent, based on 100% by mass of the polyamide resin composition.

4. The polyamide resin composition according to claim 1, wherein the aliphatic polyamide resin (A) is an aliphatic homopolyamide resin (A-1).

5. The polyamide resin composition according to claim 4, wherein the aliphatic polyamide resin (A) is a combination of two or more aliphatic homopolyamide resins (A-1) having different terminal amino group concentrations.

6. The polyamide resin composition according to claim 4, wherein the aliphatic homopolyamide resin (A-1) is an aliphatic homopolyamide resin (A-1-1) having a constituent unit derived from an aminocarboxylic acid or a lactam.

7. The polyamide resin composition according to claim 4, wherein the aliphatic homopolyamide resin (A-1) is an aliphatic homopolyamide resin (A-1-2) having a constituent unit derived from a reaction product between an aliphatic diamine and an aliphatic dicarboxylic acid.

8. The polyamide resin composition according to claim 6, wherein the aliphatic homopolyamide resin (A-1-1) is at least one member selected from the group consisting of polyamide 6, polyamide 11, and polyamide 12.

9. The polyamide resin composition according to claim 7, wherein the aliphatic homopolyamide resin (A-1-2) is at least one member selected from the group consisting of polyamide 56, polyamide 66, polyamide 410, polyamide 510, polyamide 610, and polyamide 612.

10. The polyamide resin composition according to claim 1, wherein the glass fibers (B) have an average fiber diameter of 5.0 to 12.0 µm.

11. The polyamide resin composition according to claim 1, wherein the glass fibers (B) have a number average fiber length of 200 to 350 µm.

12. The polyamide resin composition according to claim 1, wherein the glass fibers (B) have a weight average fiber length of 250 to 450 µm.

13. The polyamide resin composition according to claim 1, wherein a content of the copolymer having an acidic group is 0.5 to 10.0% by mass based on 100% by mass of the sizing agent.

14. The polyamide resin composition according to claim 1, wherein, based on 100% by mass of all constituent units of the copolymer having an acidic group contained in the sizing agent, a constituent unit derived from a monomer having an acidic group is in an amount of 20 to 60% by mass.

15. The polyamide resin composition according to claim 1, wherein a constituent unit derived from a monomer having an acidic group in the copolymer having an acidic group contained in the sizing agent is a constituent unit derived from an unsaturated carboxylic acid and/or a carboxylic anhydride.

16. A molded article which is obtained from the polyamide resin composition according to any one of claims 1 to 15.

17. The molded article according to claim 16, which is used for a part requiring a sliding property.
